(19)

Europäisches
Patentamt
European
Patent Office
Office européen
des brevets

(11) **EP 2 466 259 A2**

(12) **EUROPEAN PATENT APPLICATION**

(43) Date of publication:
**20.06.2012 Bulletin 2012/25**

(51) Int Cl.:
*G01C 21/34* (2006.01)   *G08G 1/0968* (2006.01)

(21) Application number: **11193786.8**

(22) Date of filing: **15.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2010 JP 2010278738**

(71) Applicant: **Clarion Co., Ltd.**
**Saitama 330-0081 (JP)**

(72) Inventors:
• **Yamazaki, Jun**
**Tokyo, 100-8220 (JP)**

• **Okude, Mariko**
**Tokyo, 100-8220 (JP)**
• **Hiruta, Tomoaki**
**Tokyo, 100-8220 (JP)**
• **Amaya, Shinichi**
**Saitama, 330-0081 (JP)**

(74) Representative: **MERH-IP**
**Matias Erny Reichl Hoffmann**
**Paul-Heyse-Strasse 29**
**80336 München (DE)**

(54) **Method and apparatus for route searching**

(57)    Provided is a route through which a user can smoothly travel and on which an evaluation of traveling environment is reflected. A route search system includes a user input receiving unit (13, 7517) which uses a delay time from an expected travel time as an index indicating comfort of a route and selects a factor such as traffic conditions and pedestrians set as a condition that a user desires avoidance, a delay time calculation unit (16, 715) which calculates a delay time from an expected arrival prediction time according to map information, traffic information, and traveling environment information so as to reduce a delay as far as possible due to the selected factor, and calculates a cost based on the delay time, and a route search unit (15, 7516) which calculates a cost of a link used for a route search from the delay time, and searches a route by using the calculated cost.

FIG. 11B

EP 2 466 259 A2

# FIG. 4

HEAP TABLE

| CANDIDATE MESH ID | CANDIDATE LINK ID | COST | CONNECTION SOURCE LINK ID | TOTAL COST | DETERMINED FLAG | DELAY TIME | | | |
|---|---|---|---|---|---|---|---|---|---|
| | | | | | | CONGESTION | SIGNALER | PEDESTRIAN | ----- |
| 12345678 | 23456 | 100 | 12345 | 3000 | DETERMINED | 300 | 100 | 50 | ----- |
| | | | | | UNDETERMINED | | | | ----- |
| ⋮ | ⋮ | ⋮ | ⋮ | ⋮ | ⋮ | ⋮ | ⋮ | ⋮ | ⋮ |

**Description**

BACKGROUND OF THE INVENTION

The present invention relates to a navigation system, and more particularly to a system for searching a route.

At the time of leading a route from a present place to a destination by using a navigation system in recent years, when a user selects conditions such as time preference, distance preference, and general road preference, a technology for searching an optimum route for the user and leading and guiding the route is in widespread use. When a user selects a time preferential route, a car navigation apparatus searches by using real-time traffic information and statistical traffic information a route in which a necessary time up to a destination is minimized. To serve broad needs of users, a technology for searching the optimum route and leading and guiding the route is developed with regard to conditions such as comfort and safety in addition to the above time preference, distance preference, and general road preference.

As disclosed in JP-A-2005-77299, for example, there is used a technology in which when an arbitrary object condition is selected, a plurality of routes connecting two spots are evaluated by weighting data corresponding to the object condition and a route optimum for the object condition is provided. Evaluation of the weighting data corresponding to the object condition is weighted based on a weighting table determined for each object condition and stored in a weighting table database with respect to any of determination items of a node (the presence or absence of signalers, the number of road cross-points, a prospect level, the number of annular accidents) and those of a link (the presence or absence of one-way traffic, a differentiation of express highway and general road, a degree of traffic congestion, the number of signalers, a maximum curve curvature, a road width, the number of annular accidents, a maximum gradient, an average gradient, and a convexo-concave level of road surface).

SUMMARY OF THE INVENTION

According to the method disclosed in JP-A-2005-77299, a route adaptable to various object conditions can be searched and provided to users. However, in JP-A-2005-77299, a method for setting a weighting table on which a relationship between comfort and real road conditions and traffic conditions is reflected is not taken into consideration. That is, since a relationship between an evaluation item and comfort is not taken into consideration, even if a route is calculated based on a weight set by the evaluation, its result does not necessarily come off a comfortable route. With regard to the weight of a relationship between congestion and the presence or absence of signalers, for example, when a weight having how much magnitude relation is set, whether a user can search a most comfortable route is not generally obvious.

Further, in a real travel, a magnitude relation of a weight between items may be different based on a difference of areas such as an urban area and a suburb, or a difference of time zones such as night and day, and weekday and holiday. For example, even if the number of signalers is the same as each other, a degree of comfort felt by a user during driving is different between a case where a vehicle travels through a national road with heavy traffic and a case where a vehicle travels through an off road with light traffic.

As described above, for the purpose of providing a comfortable route for a user, it becomes important to calculate an index indicating comfort on which various conditions such as areas and time zones are reflected. Accordingly, the method disclosed in JP-A-2005-77299 fails to sufficiently serve the object. To provide a comfortable route, a comfortable route needs to be defined, an index of a relationship between the comfort and the evaluation items of traveling environment needs to be defined, and then a route needs to be calculated.

It is an object of the present invention to provide a route in which the above-described problem is solved and through which a user can travel more comfortably by a route search using an index indicating the comfort.

To solve the above problem, the route searching method according to the present invention uses the delay time from the expected travel time as an index indicating comfort of routes, and provides to a user a route capable of smooth travel so as to reduce a delay received from a factor such as traffic conditions and pedestrians as far as possible with regard to a spot set as conditions that the user expects avoidance. Therefore, the route searching method performs a step of calculating the delay time from an expected arrival prediction time according to map information, traffic information, and traveling environment information with regard to a spot in which the user expects the avoidance, calculating a weighting parameter (hereinafter, referred to as a cost) for each link used for a route search based on the delay time, and/or calculating a cost minimum route from a departure place to a destination by using the above cost.

In one or more conditions that a user desires avoidance, a delay time from an expectation of a user generated in a case where the condition is encountered may be calculated and reflected on the cost used for a route search. Through the above processing, a route in which the delay time is considered can be searched and a route through which a user can smoothly travel desirously can be provided.

Other objects, features and advantages of the invention will become apparent from the following description of the embodiments of the invention taken in conjunction with the accompanying drawings.

BRIEF DESCRIPTION OF THE DRAWINGS

FIG 1 illustrates a configuration diagram of a route search system according to the present invention;
FIG 2 is a flowchart illustrating processing of a route search system according to the present invention;
FIGS. 3A to 3D illustrate data configurations of map information, traffic information, and traveling environment information;
FIG 4 illustrates one example of heap data created at the time of searching a route;
FIG 5 is a flowchart illustrating cost calculation processing;
FIG 6 illustrates a stopping probability of a signaler based on a road type;
FIG 7 illustrates another configuration diagram of a route search system according to the present invention;
FIG 8 is another flowchart illustrating processing of a route search system according to the present invention;
FIG 9 is a flowchart illustrating cost update processing in a central device;
FIG 10 illustrates a data configuration of cost information stored in a cost database;
FIGS. 11A and 11B each illustrate one example of a route search condition input screen; and
FIGS. 12A and 12B each illustrate one example of a search result display screen.

DESCRIPTION OF THE EMBODIMENTS

Hereinafter, preferred embodiments of the present invention will be described with reference to the accompanying drawings of the embodiments.

First Embodiment

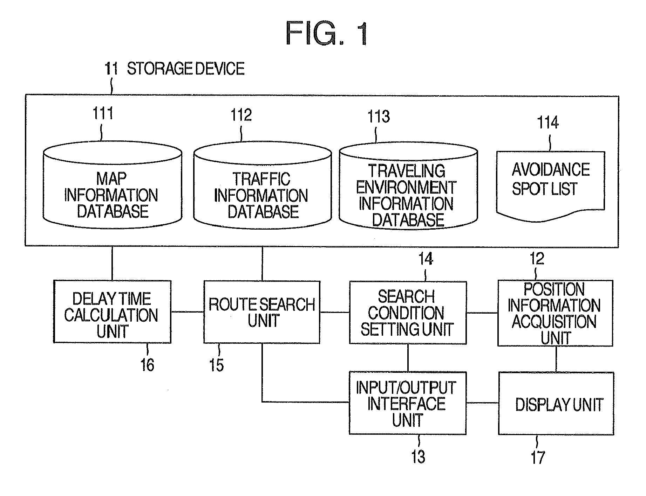

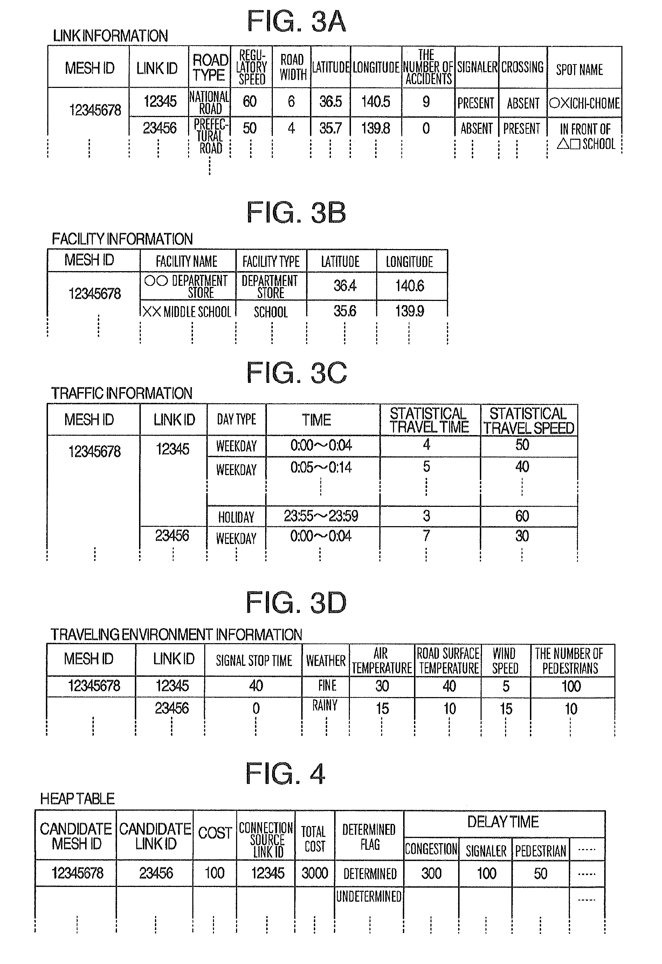

FIG. 1 illustrates a configuration diagram of a navigation apparatus for realizing a route searching method to which one embodiment of the present invention is applied. In the present invention, a route in which an influence to be received from traffic conditions or pedestrians is reduced as far as possible and through which a user can smoothly travel is searched as a comfortable route. Therefore, assuming that a size of a delay time during travel exerts a large influence on a size of odor unpleasantness felt by a driver, the navigation apparatus performs a route search in which the above delay time is set as an index of the comfort. As illustrated in FIG 1, the navigation apparatus according to the present embodiment includes a storage device 11, a position information acquisition unit 12, an input/output interface unit 13, a search condition setting unit 14, a route search unit 15, a delay time calculation unit 16, and a display unit 17.
As illustrated in FIG 1, the storage device 11 includes a map information database 111, a traffic information database 112, and a traveling environment information database 113. As a configuration example of map information stored in the map information database 111, FIG 3A illustrates link information, and FIG 3B illustrates facility information. Further, FIG 3C illustrates a configuration example of traffic information stored in the traffic information database, and FIG 3D illustrates a configuration example of traveling environment information stored in the traveling environment information database. The above link information, traffic information, and traveling environment information are stored in relation to meshes indentified by a mesh ID and links identified by a link ID. Here, the mesh represents a rectangular area (e.g., an area of a latitude difference of 40 arc-minutes and a longitude difference of one degree) set based on the latitude and longitude. At this time, a size of the mesh may be appropriately set by a resolution of a congestion range or configurations of roads found by a user. Further, a link is a part constituting a road, and represented as a vector connecting nodes specified to an intersection or branching. At this time, an up direction and down direction of the same road are assumed to be managed as links different from each other.
The link information includes information such as a road type representing a classification of express highways and general national roads, a regulatory speed indicating a regulatory speed at the time of traveling through a link, a road width indicating a width of the link, the latitude and longitude representing a position coordinate of a representative point (e.g., a midpoint of the link) of the link, the number of accidents caused on the relevant link in the past, the presence or absence of a signaler in a link termination point, the presence or absence of a crossing in the link, and a spot name representing the link.
The facility information includes information such as a facility name, a facility type of a department store and a school, and the latitude and longitude indicating a position coordinate of a representative point of facilities.
The traffic information includes a statistic speed and a statistical travel time as statistical traffic data created with regard to a day type (a day of the week, weekday/Saturday/holiday, gotohbi, weather) of a prediction object day and a time zone of fixed intervals (e.g., for each five minutes) with respect to one link (Here, the "gotohbi" are days in which roads are apt to be crowded due to a certain Japanese custom). In this case, when past days corresponding to a day type of a prediction object day are multiple days, a statistic score such as an average and median value of a link travel speed relating to the same time zone of them corresponds to a statistical travel speed of the link. In the same manner as in the above travel speed, the statistical travel time is a statistic score of the link travel time of the same day type and the same time zone. In addition to the above, the traffic information may include information acquired by an on-street sensor or real-time traffic information required from information transmitted from a probe car. As this component (not illustrated), traffic information is acquired from the outside via a cellular phone, wireless communication, and broadcast, and further the acquired traffic information may be used.

The traveling environment information includes information such as an average signal stop time at the time of passing through the link, weather information such as weather, an air temperature, and a wind speed at the time of being scheduled to travel obtained from a weather information center, and a road surface temperature and the number of pedestrians to be averagely encountered.

The position information acquisition unit 12 calculates a position of a departure place and acquires the present time. At this time, for example, the position information acquisition unit 12 calculates a position based on information acquired from at least one of a vehicle speed sensor, gyro sensor, and GPS receiver. The vehicle speed sensor measures a travel distance from a product of a circumference of a wheel and the number of revolutions of the wheel to be measured, and further measures a curved angle from a difference of the number of revolutions of the wheels making a pair with each other. Examples of the gyro sensor include an optical fiber gyro and a vibration gyro, and the gyro sensor detects a turned angle of a wheel to which a sensor is attached. The GPS receiver receives a signal from a GPS satellite. Between the GPS receiver and three or more GPS satellites, the GPS receiver measures a distance between the GPS receiver and the GPS satellite, and a rate of change of the distance.

The input/output interface unit 13 transmits information relating to a departure place, destination, and route search conditions to the route search unit. The departure place information is calculated by the position information acquisition unit 12 as a place in which a terminal having this system mounted thereon is present. The destination information is set by a method for selecting a spot on a map displayed on the display unit by a position on a screen through a user or a method for specifying the above spot by the latitude and longitude. At this time, the user may specify the departure place information by using the same method as the method for specifying the destination information.

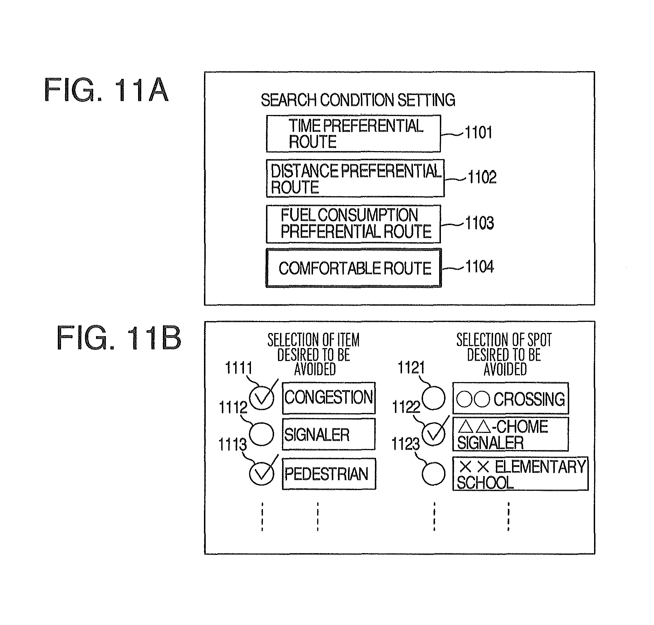

The route search conditions are specified by a format of selecting at least one of conditions of routes desired by the user from options displayed on a screen of the display unit. FIG 11A illustrates one example of route search condition setting screens. The user selects one of the options such as a time preferential route, distance preferential route, fuel saving preferential route, and comfortable route displayed on the screen to thereby specify a search condition desired by himself or herself.

Further, the input/output interface unit 13 transmits information on the route calculated by the route search unit to the display unit.

The search condition setting screen 14 transmits to the route search unit the search conditions transmitted via the input/output interface unit 13, the information on the destination, and the departure place information transmitted from the position information acquisition unit.

In the case where the user selects a comfortable route as the route search conditions, the route search unit 15 defines this comfortable route as a route through which the user can smoothly travel as far as possible. Based on the following two assumptions (1) and (2), accumulation of the delay time is found as an index of smooth driving, and the comfortable route is found as the delay time minimum route. That is, (1) the reason that the user feels that driving is not smooth is that the odor unpleasantness accumulated during travel is large. Further, (2) a level of the odor unpleasantness is influenced by the delay time from an expected ideal travel. Since the delay time from the above expected ideal travel is found, the delay time is evaluated based on the selected events as conditions that avoidance is desired in order to realize an ideal travel expected by a driver. Further, the delay time based on the unselected event is assumed to be not included in the evaluation of the delay time as a factor about which a driver is not self-conscious, namely, a factor which fails to contribute to hedonic scale of driving. To the delay time calculation unit 16, the route search unit 15 transmits link information on the link to be searched and information on the item desired to be avoided during the travel of the user, and requests the delay time calculation unit 16 to transmit the cost information. The route search unit 15 performs search by using the cost of the link calculated by the delay time calculation unit 16. In a route search algorithm, Dijkstra's algorithm is generally used and a route having a minimum cost from the departure place to the destination is calculated.

The delay time calculation unit 16 calculates cost of the link requested by the route search unit 15 by using the road information, traffic information, and traveling environment information stored in the storage device 11.

The display unit 17 displays options for search conditions at the time of setting the search conditions so that the user can select the search conditions. By using map information, the display unit 17 draws a road, other map constructs, a mark indicating a departure place, and a route calculated through the route search by a specified scale and a drawing method (a plan view and a bird's-eye view).

Through the above configurations, there can be searched a comfortable route through which the user can travel most smoothly among the routes from a departure place to a destination.

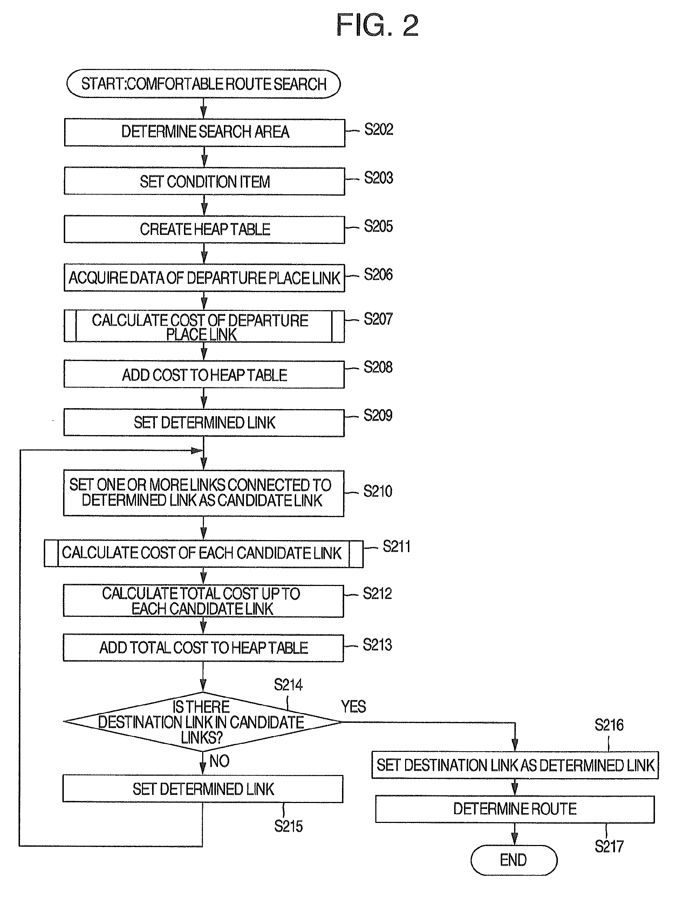

Next, comfortable route search processing of the navigation apparatus according to the present embodiment will be described with reference to a flowchart illustrated in FIG 2. Prior to the comfortable route search processing, the departure place, destination, and departure time are first set in the navigation apparatus. At this time, the departure place and departure time are assumed to be a present position and present time of a terminal acquired by the position information acquisition unit 12. By using a method for supplying a position on a map or the latitude and longitude displayed on the display unit 17, the user specifies the destination via the input/output interface unit 13. The user may specify the departure place by using the same method as the method for specifying the destination. In addition, the departure time may be specified by an input of the user.

Next, the user supplies search conditions via the input/output interface unit 13. At this time, the user specifies a route desired by himself or herself on the screen illustrated in FIG. 11A. Here, the time preferential route 1101 is a route that the total travel time up to a destination is minimized, the distance preferential route 1102 is a route that the total travel distance up to a destination is minimized, the fuel consumption preferential route 1103 is a route that fuel consumption up to a destination is minimized, and the comfortable route 1104 is a route that the delay time up to a destination is minimized. FIG 11A illustrates items for specifying a search of the above-described routes, respectively. When the user selects the comfortable route 1104 on the screen illustrated in FIG 11A, the comfortable route search processing is started.

In the comfortable route search processing, a search area is first determined (step S202). Meshes including a departure place and a destination are identified, respectively, and the search area is set as an area of a rectangle using as a diagonal line a line segment of connecting two meshes or an ellipse including two meshes. The search area is a range in which the after-mentioned candidate link is selected, and the route is searched within the search area.

Next, a user inputs a condition item desired to be avoided in the comfortable route search processing via the input/output interface unit 13 (step S203). At this time, a screen illustrated in FIG 11B is presented to the user, and on this screen, the user selects names of items (hereinafter, referred to as an avoidance item) desired to be avoided during travel and a spot (hereinafter, referred to as an avoidance spot) desired to be avoided, and sets avoidance conditions. Here, the avoidance item includes a factor having a possibility of losing smoothness of travel through the encounter, such as congestion 1111, signalers 1112, and pedestrians 1113. The avoidance item presented as a selection item corresponds to an item to be registered as the delay time in the after-mentioned heap table. In the search area set at step S202, the avoidance spot is a specific spot in which smoothness is predicted to be lost by passing nearby the spot during the travel, and represented by a spot name included in the link information of FIG 3A. In Fig.11B, the avoidance spots are shown as a crossing 1121, a signaler 1122, an elementary school 1123 and so on.

In the above avoidance spot, a sum of the delay time relating to the avoidance item associated with each link is previously calculated, and an avoidance spot list 114 in which the sum is associated with a link ID and a spot name is previously stored in the storage device 11. When selecting the condition items at step S203, a predetermined number is selected in the order corresponding to the large delay time among the avoidance spots corresponding to road links belonging to the search area determined at step S202, and a route search condition input screen is presented to the user as illustrated in FIG 11B.

Here, in the case where the user fails to select even one avoidance item, a message to the effect that the user selects at least one avoidance item is displayed on the display unit and the terminal instructs the user to select at least one avoidance item. Or, alternatively, the delay time calculation unit 16 reflects the delay time relating to all the items capable of calculating the delay time to calculate the cost.

In the selected avoidance spots, the delay time is calculated with regard to the avoidance item previously determined with regard to each avoidance spot. In this case, the corresponding link is investigated with regard to each of the avoidance spots, and if a signaler is installed on the link end, the signaler and congestion are included in the avoidance item. With relation to each facility in which facility information is searched and which is present in a predetermined distance from a link, the avoidance item determined according to a type of each facility is included in a calculation object of the delay time. For example, if the facility is a school, pedestrians are included in the avoidance item, and if the facility is a station, pedestrians and congestion are included in the avoidance item. Further, the delay time is calculated with regard to the above avoidance items.

Alternatively, when even one avoidance item is selected and further the avoidance spot is selected, the delay time may be calculated with regard to the avoidance item selected with regard to the selected avoidance spot.

In addition, the avoidance conditions illustrated in FIG 11B may be previously stored (not illustrated) in the storage device 11. Further, the avoidance conditions may be used.

Next, the route search unit 15 creates a heap table (step S205). Here, the heap table is a table for registering link data of a candidate link to be searched as well as a total cost from the departure place to the candidate link. FIG 4 illustrates a data configuration for the heap table. As illustrated in FIG 4, a record (corresponding to one row of the table) for each candidate link is registered in the heap table. Each record includes respective fields such as a "candidate mesh ID" field for storing a mesh ID of a mesh including a candidate link, a "candidate link ID" field for storing a link ID of the candidate link, a "cost" field for storing a cost of the candidate link, a "connection source link ID" field for storing a link ID of a link connected to the candidate link, a "total cost" field for storing a total cost from a departure place to the candidate link, a "determined flag" field for registering a determined flag representing whether to be set as the after-mentioned determined link at steps S209 and S215 of FIG. 2, and a field for storing the delay time for each item such as congestion, signalers, and pedestrians that the user desires avoidance. The candidate link in which this determined flag is registered serves as a determined link. At a time point where the heap table is created at step S205, the heap table is in a blank state where no candidate link is registered.

At least one link (hereinafter, referred to as a departure place link) in which a departure place is present or which is close to a departure place is first registered as a candidate link, and its link data is acquired from the map information database 111 stored in the storage device 11 (step S206). A mesh ID, link ID, and search conditions of the departure place link are transmitted to the delay time calculation unit 16. The delay time calculation unit 16 calculates costs of the departure place link by using information of the map information database 111, traffic information database 112, and traveling environment information database 113 stored in the storage device 11 (step S207). Detailed processing of the above step will be described later.

The cost and total cost calculated with regard to the departure place link are added to the heap table, respectively (step S208). At this time, the cost of each departure place link calculated at step S207 is input in the total cost. Note that since the departure place link is a first link, a field of the connection source link ID is kept to be blank. Then, a link that the total cost is minimized among the departure place links is set to be a determined link (step S209). Here, the determined link is a link that a recommended route is determined to be configured by among the candidate links, and "determined" is input in the field of the determined flag of the heap table. All links except the determined link included in the heap table are called an undetermined link, and "undetermined" is input in the field of the determined flag with respect to the undetermined link.

Next, at least one link connected to the determined link (hereinafter, referred to as a terminal link) determined at a previous step is set as the candidate link, and its link information is acquired from the storage device 11 (step S210). This determined link set at the previous step is called the terminal link. The candidate link is a link which is not included in the heap table at this time point.

In the same manner as in the step S207, the delay time calculation unit 16 calculates a cost of each candidate link (step S211). Detailed processing of this step will be described later. Next, the delay time calculation unit 16 calculates a total cost from the departure place link to each candidate link (step S212). The total cost is a value obtained by adding the cost of each candidate link calculated at step S211 to the total cost of the terminal link. In each candidate link, the connection source link ID, the cost of each candidate link calculated at steps S211 and S212, and the total cost are added to the heap table along with the link ID of the candidate link (step S213).

Next, the route search unit 15 determines whether a link (hereinafter, referred to as a destination link) including a destination is present among links being the candidate link at present (step S214). Specifically, the route search unit 15 identifies a mesh code including the candidate link and compares coordinates of each spot of the link with those of the destination set at step S201. Further, the route search unit 15 determines whether these coordinates are matched with each other or close to each other within a predetermined range. If the route search unit 15 determines that the destination link is absent among links being the candidate link at present (No at step S214), the process proceeds to step S215. At step S215, the route search unit 15 searches a total cost of the undetermined link stored in the heap table, selects the candidate link in which the total cost is minimized, and sets this candidate link as a new determined link. Further, the "determined" is input in the field of the determined flag of the heap table in the determined link. On the other hand, the "undetermined" is input in the field of the link failing to serve as the determined link.

On the other hand, in the processing of step S214, when determining that the destination link is present among the links being the candidate link at present (Yes at step S214), the route search unit 15 identifies the link, and the process proceeds to step S216. At step S216, the route search unit 15 sets the candidate link identified as the destination link at step S215 as the determined link. To the determined flag of the heap table in the link set as the determined link, the "determined" is added. To the candidate link failing to be set as the determined link, the "undetermined" is added.

The route search unit 15 sets as a first link a link in which the connection source link ID field of the heap table is blank and the "determined" is added to the determined flag. Then, the route search unit 15 refers to the connection source link ID and determined flag of the heap table to thereby acquire a link sequentially. Further, the route search unit 15 sets the acquired link as a configuration link of the route in the order corresponding to the acquisition to determine the comfortable route (step S217). Further, the route search unit 15 transmits information on the determined comfortable route to the display unit 17 and displays the information on a screen.

When performing optimum route search processing based on the above Dijkstra's algorithm, the route search unit 15 can search the comfortable route in which the condition items previously set in the cost calculation processing of steps S207 and S211 are reflected on the cost.

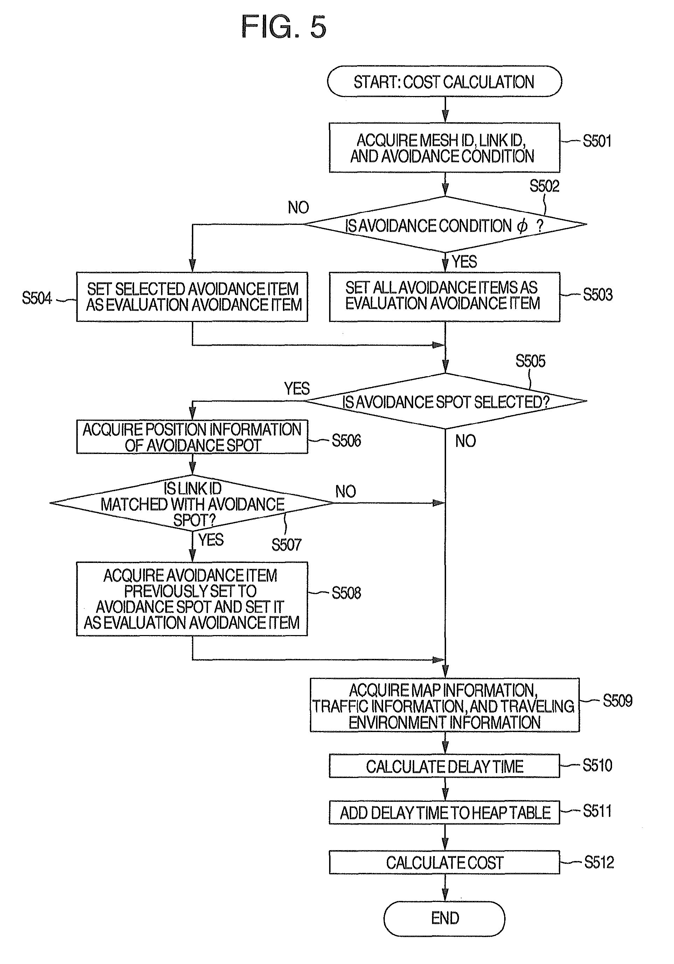

Next, the cost calculation processing of steps S207 and S211 illustrated in FIG 2 will be described with reference to FIG 5.

The delay time calculation unit 16 first acquires a mesh ID, link ID, and avoidance conditions of the link for calculating the cost from the route search unit 15 (step S501). The avoidance conditions are information on the condition item desired to be avoided by a user selected based on the screen of FIG 11B in the processing of step S203. In the case where failing to perform selection on the screen of FIG 11B, the delay time calculation unit 16 calculates the delay time under the condition that all the avoidance items are selected with respect to all links of the delay time calculation unit 16. Therefore, the delay time calculation unit 16 investigates whether to select some sort of items as the avoidance conditions (step S502). If no avoidance conditions are selected (Yes at step S502), under the condition that all the disclosed items presented on the screen of FIG 11B are selected, the delay time calculation unit 16 sets all the disclosed items as an evaluation avoidance item to be evaluated for calculating the delay time (step S503). On the other hand, if some sort of the avoidance conditions are selected (No at step S502), the delay time calculation unit 16 sets the avoidance items selected based on the screen of FIG 11B as this evaluation avoidance item (step S504). At this time, if the avoidance spot is selected and the avoidance item is not selected, no avoidance items to be evaluated are set as the evaluation avoidance item.

Next, the delay time calculation unit 16 investigates whether the avoidance spot is included in the avoidance conditions acquired at step S501 (step S505). If the avoidance spot is selected (Yes at step S505), the delay time calculation unit 16 acquires position information corresponding to each selected avoidance spot (step S506). Further, the delay time calculation unit 16 investigates whether position information found with reference to link information from the mesh ID and link ID acquired at step S501 is matched with each acquired position information (step S507). If the avoidance spot is matched with the position information corresponding to the link ID (Yes at step S507), the delay time calculation unit 16 acquires the previously set avoidance item with respect to the avoidance spot and sets the acquired avoidance items as the evaluation avoidance item (step S508).

The delay time calculation unit 16 calculates the delay time relating to the thus set evaluation avoidance item. Then, the delay time calculation unit 16 searches the storage device 11 by using the mesh ID and the link ID acquired at step S501. Further, the delay time calculation unit 16 acquires map information, traffic information, and traveling environment information corresponding to a link as an object of the cost calculation from the map information database 111, the traffic information database 112, and the traveling environment information database 113, respectively (step S509). Next, the delay time calculation unit 16 classifies the delay time calculated with regard to the avoidance item set as the evaluation avoidance item with respect to the individual avoidance items such as congestion, signalers, and pedestrians. The delay time calculation unit 16 then calculates the delay time of each avoidance item by using the map information, traffic information, and traveling environment information acquired at step S509 (step S510). A method for calculating the delay time $T_{d1}$ due to congestion, the delay time $T_{d2}$ due to signalers, and the delay time $T_{d3}$ due to pedestrians will be described in detail below, respectively, as the delay time based on the setting of the evaluation avoidance item.

In the case where congestion is set as the evaluation avoidance item, the delay time $T_{d1}$ due to congestion is set to a difference of the travel time between travel in the state where congestion fails to occur and real travel. Here, when congestion fails to occur, a vehicle is assumed to travel at a regulatory speed. During the real travel, a vehicle is assumed to travel at a statistical travel speed included in the map information. Since a negative cost cannot be handled in Dijkstra's algorithm, Td1 is set to a value equal to or more than zero. Therefore, the delay time $T_{d1}$ due to congestion is calculated from the following formula 1.

$$T_{d1} = Max\left( 0, \quad \frac{L}{V_{stat}} - \frac{L}{V_{reg}} \right) \qquad ...(Formula\ 1)$$

Here, L is set as a link length, $V_{stat}$ is set as a statistical travel speed, and $V_{reg}$ is set as a regulatory speed.

The delay time $T_{d2}$ due to signaler is set as an expected value of a stop time due to a red signal based on the fact that travel in which a user fails to stop due to a signaler is set as travel expected by the user. The expected value $T_{d2}$ of the stop time due to a red signal is calculated from the following formula 2 as in Yasunori Iida et al.; Traffic Engineering, Kokumin-Kagakusha, pp. 248 to 249, 1992.

$$T_{d2} = \frac{1}{(T_R + T_G)q} \cdot \frac{T_R}{2} \cdot \frac{T_R q S}{S - q} \qquad ...(Formula\ 2)$$

Here, $T_R$ is set as a red signal time, $T_G$ is set as a blue signal time, q is set as the volume of inflow traffic, and S is set as a saturation traffic, flow rate.

In formula 2, assuming that the saturation traffic, flow rate is sufficiently larger than the volume of inflow traffic, when S»q, S/(S-q) is equivalent to approximately one. Therefore, when formula 2 is transformed, the following formula 3 is obtained.

$$T_{d2} = \frac{1}{(T_R + T_G)q} \cdot \frac{T_R \cdot T_R q}{2}$$

$$= \frac{(T_R + T_G) \cdot \left\{ \frac{T_R}{(T_R + T_G)} \right\}^2}{2} \qquad \ldots \text{(Formula 3)}$$

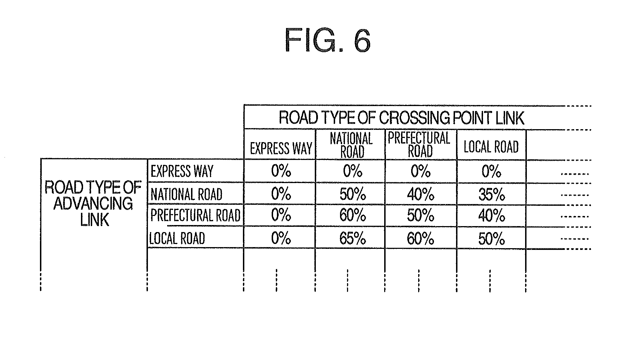

Here, $(T_R + T_G)$ of the right side of formula 2 represents a cycle length indicating time per cycle of the signal, and $T_R/(T_R + T_G)$ represents a stop probability of the signal. Here, the cycle length is set to a uniform value (e.g., 120 [sec]), and when the stop probability of the signal is determined in combination of a road type of an advancing link through which a user's vehicle is traveling and that of a link which intersects with the advancing link, the expected value $T_{d2}$ of the stop time can be calculated from the map information. Here, assuming that an influence of a link (assuming that a rank is higher in the order corresponding to a national road> a prefectural road>a general road) having a highest rank among links which intersect with the advancing link is largest as a road type of the crossing point link, the road type is used as a road type of the crossing point link. At this time, since a signaler is absent in an express highway, the stop probability is assumed to be zero and traffic volume is assumed to be larger in the order corresponding to a national road> a prefectural road>a general road. There are reflected conditions that as the traffic volume of the advancing link is larger, the stop probability is lower, and as the traffic volume of the crossing point link is larger, the stop probability is higher. Further, the stop probability is determined for each combination of the road type as illustrated in FIG 6, and stored in the storage device 11.

The delay time $T_{d3}$ due to pedestrians is considered to be large near facilities in which a number of pedestrians are considered to enter and leave. In the case where encountering pedestrians while traveling through a link, a user is considered to drive at a slow speed. The delay time $T_{d3}$ due to pedestrians is calculated from the following formula 4.

$$T_{d3} = L \cdot F(j,l) \cdot G(j,c,t) \left( \frac{1}{V_{slow}} - \frac{1}{V_{stat}} \right) \qquad \ldots \text{(Formula 4)}$$

Here, j is an index representing a type of the facility. Further, 1 represents a distance between a link and a facility nearest to the link, and is calculated from the latitude and longitude indicating positions of the link and facility. At this time, the facility for calculating a distance 1 is assumed to be a facility corresponding to a type (e.g., a department store and a school) that a number of pedestrians are considered to enter and leave. Further, c represents a day type, t represents a time, $V_{slow}$ represents a slow speed (e.g., 10 kilometers an hour), and $V_{stat}$ represents a statistical travel speed.

Here, F being a function of a distance 1 between the link and the facility represents a probability that a user encounters pedestrians while traveling through the link. For example, the function F is determined by the following formula 5.

$$F(\text{Department store, } l) = \begin{cases} 0.9 \ (l < 50[m]) \\ 0 \ (50[m] \le l) \end{cases}$$
$$F(\text{School, } l) = \begin{cases} 0.8 \ (l < 100[m]) \\ 0.4 \ (100[m] \le l < 500[m]) \\ 0 \ (500[m] \le l) \end{cases}$$

$$\dots(\text{Formula 5})$$

This formula 5 depends on a type of the facility, and represents that as a distance between the link and the facility is shorter, a probability that a user encounters pedestrians is higher.

In addition, G is a time function, and determined, for example, as in the following formula 6 so as to grow large in a time zone at which a number of pedestrians enter and leave.

$$G(\text{department store, } c, t) = \begin{cases} 1 \ (c=\text{holiday, opening time} \le t \le \text{closing time}) \\ 0 \ (\text{case of other times except the above time}) \end{cases}$$
$$G(\text{school, } c, t) = \begin{cases} 1 \ (c=\text{weekday, } t \approx \text{attending school time or } t \approx \text{going home time}) \\ 0 \ (\text{case of other times except the above time}) \end{cases}$$

$$\dots(\text{Formula 6})$$

As represented in formula 6, a value of the function G is desired to be changed depending on a difference of a type of the facility.

In the above formula 4, the time function G and F being the function of a distance 1 between the link and the facility are determined, and the delay time $T_{d3}$ due to pedestrians is calculated. Here, when information of the number of pedestrians in the link included in the traveling environment information can be used, the delay time $T_{d3}$ due to pedestrians may also be calculated from the following formula 7.

$$T_{d3} = n \cdot l_{slow}\left(\frac{1}{V_{slow}} - \frac{1}{V_{stat}}\right)$$

$$\dots(\text{Formula 7})$$

Here, n is set as the number of pedestrians, and $l_{slow}$ is set as a distance for reducing a speed per pedestrian.

Further, whether a sidewalk is present in the link is estimated from a road type of the link based on a rule as in the Road Construction Ordinance. Alternatively, a case where a road width of the link is considered and the presence of a sidewalk is determined, a case where an item of the presence or absence of a sidewalk is included in the link information and the sidewalk is present, and a case where a road width is wide, the delay time due to pedestrians may be determined to be reduced.

Returning to a description of FIG. 5, the link ID of a link and the above calculated delay time of each avoidance item are input in the heap table illustrated in FIG 4 (step S511). As illustrated in FIG 4, the delay time of each of the avoidance items in each link is thus input.

On the other hand, based on the determination of step S507, when the link ID acquired at step S501 is not matched with that of the selected avoidance spot (No at step S507), the process proceeds to step S509. Further, the delay time is calculated and input in the heap table at step S511. Here, through the processing of step S510, the delay time may be calculated only with respect to the avoidance item set as the evaluation avoidance item. Alternatively, the avoidance item for calculating the delay time may be further selected from the facility near the link for calculating a cost.

When a signaler is present in a terminal point of the link, for example, the delay time due to a signaler is calculated. In a facility apart from a road in which a number of pedestrians are predicted to be present around as in schools and stores, when a distance between the facility and a link is within a constant threshold (e.g., 500 meters), the delay time due to pedestrians is calculated. Or, alternatively, when one avoidance spot is considered to be a set of a plurality of links and a certain avoidance spot is selected, the delay time relating to a link associated with the above avoidance spot may be calculated and reflected on the cost. In this case, from the presence or absence of signalers and facilities near each link belonging to a set of the link associated with the avoidance spot, the selection of items (avoidance items) for calculating the delay time at the time of calculating the cost is determined. In addition, when the delay time is calculated based on the avoidance spot of step S510, a spot name of the link for calculating the cost is assumed to be acquired (step S506).

Referring to an example of the selection illustrated in FIG 11B, a signaler 1122 of ΔΔ chome is selected as an avoidance spot desired to be avoided based on the judgment that a waiting time for a certain signaler is long, for example, from an experience of a driver. However, since a signaler 1112 of the avoidance item is not selected, the delay time is calculated with respect to a link in which a signaler 1112 of ΔΔ chome is present in a terminal point. As described above, the delay time can be reflected on the cost and avoided in only a particular spot selected based on the judgment of the driver.

Through the above processing, when calculation of the delay time relating to all of the avoidance items and avoidance spots selected by the user is completed, the cost is calculated by using the calculated delay time (step S512). Here, from the information of the calculated delay time $T_{d1}$, $T_{d2}$, ... and the search conditions, the cost $T_d$ of this link is calculated in accordance with the following formula 8.

$$T_d = \sum T_{dk} \qquad \ldots \text{(Formula 8)}$$

At this time, when the avoidance spot is selected by the user, the avoidance item to be reflected on the cost with respect to each avoidance spot is specified and stored in the storage device 11 as described above. Therefore, the delay time relating to the avoidance item is calculated in the selected avoidance spot. For example, when a signaler of ΔΔ chome is selected, the delay time due to congestion and signalers is previously determined to be considered.

This correspondence of the avoidance item to each avoidance spot is specified at the time of extracting the avoidance spot and creating the avoidance spot list 114. As extraction processing for the avoidance spot, the delay time relating to each link is previously evaluated and a spot (link) in which the delay time is large is extracted. At this time, the facility near each link is searched from facility information. Further, the item of the delay time to be calculated in each type of the facility, namely, the avoidance item is previously determined and the avoidance item is determined from a sum of sets of the avoidance item. Suppose, for example, that a "signaler", a "school", and a "station" are present as a type of the facility near a certain "link A" and the item of the delay time to be calculated with respect to the "signaler" is two avoidance items of the "signaler" and the "congestion". Suppose, in the same manner, that the item of the delay time relating to the "school" is set as an avoidance item of the "pedestrian" and the item of the delay time relating to the "station" is set as two avoidance items of the "pedestrian" and the "congestion". At this time, when a spot name of this "link A" is "OX", the "signaler", "congestion", and "pedestrian" being a sum of sets of the avoidance items are associated with the avoidance spot "OX". A link in which a sum of the delay time calculated with respect to the above avoidance items is equal to or more than a predetermined threshold is extracted, and the extracted link is recorded in the avoidance spot list 114 along with spot names of the avoidance spots and the avoidance item associated with them.

Here, when the avoidance item such as congestion and pedestrians and the avoidance spot such as a ΔΔ chome signaler are selected by the user as illustrated in FIG 11B, the cost of a link in which the ΔΔ chome signaler is present in a terminal point of the link is set to $T_d=T_{d1}+T_{d2}$ based on the above-described specification. In the other links except the above link, a selection in which the other signalers fail to be avoided is not desired to avoid any signaler and considered not to get involved with odor unpleasantness felt by a driver in the other signalers. Therefore, the cost is calculated as formula $T_d=T_{d1}+T_{d3}$.

As described above, processing of FIG 5 is performed and the cost is calculated in each link serving as the candidate link of step S207 or S211 illustrated in FIG 2.

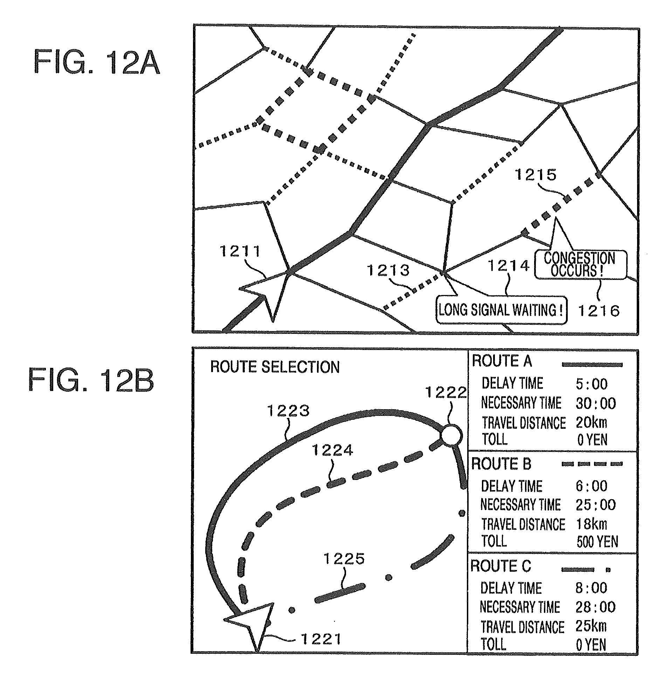

FIGS. 12A and 12B illustrate display examples of search results through this navigation apparatus. FIG 12A illustrates the comfortable route as the search result by a thick line. At this time, in the links near a present position 1211 of a user's vehicle, a link with a large cost may be displayed while changing a usual color or giving a mark. In FIG 12A, a link with an especially large cost is illustrated by a thick dotted line, and a link with a somewhat large cost is illustrated by a middle dotted line. Based on the above-described display, the user can grasp a link in which the delay time is large and smooth travel cannot be performed, and travel while avoiding the link.

When creating the heap table illustrated in FIG 4 during the route search processing, a link in which a value of the delay time calculated with regard to each avoidance item is larger than a predetermined threshold may be stored. Further, a main factor in which the delay time is large may be displayed according to a size of values of each avoidance item constituting the cost or the delay time of the avoidance spot. For example, in a link 1213 of FIG 12A, when the delay time due to signalers is larger than a previously regulated threshold or the delay time due to surrounding signalers, a message 1214 to the effect that signal waiting becomes long is displayed with respect to a terminal point of the link 1213. Further, in a link 1215 of FIG. 12A, in the case where the delay time due to congestion is large, when a message 1216 to the effect that congestion occurs in the link 1215 is displayed, a place in which congestion occurs statistically can be clearly demonstrated. Through the above-described display, the user can grasp also a reason for the large delay time of a road through which the user cannot travel smoothly.

Further, FIG 12B illustrates an example in which as a route from a departure place 1221 up to a destination 1222, in addition to the comfortable route, the route is searched also by search conditions such as the time preferential route and the distance preferential route, and a plurality of routes 1223 to 1225 are simultaneously displayed on the map. At this time, when the total delay time, travel time, travel distance, and toll of each route are displayed, the user can compare multiple factors of routes and select a route for satisfying himself or herself.

Second Embodiment

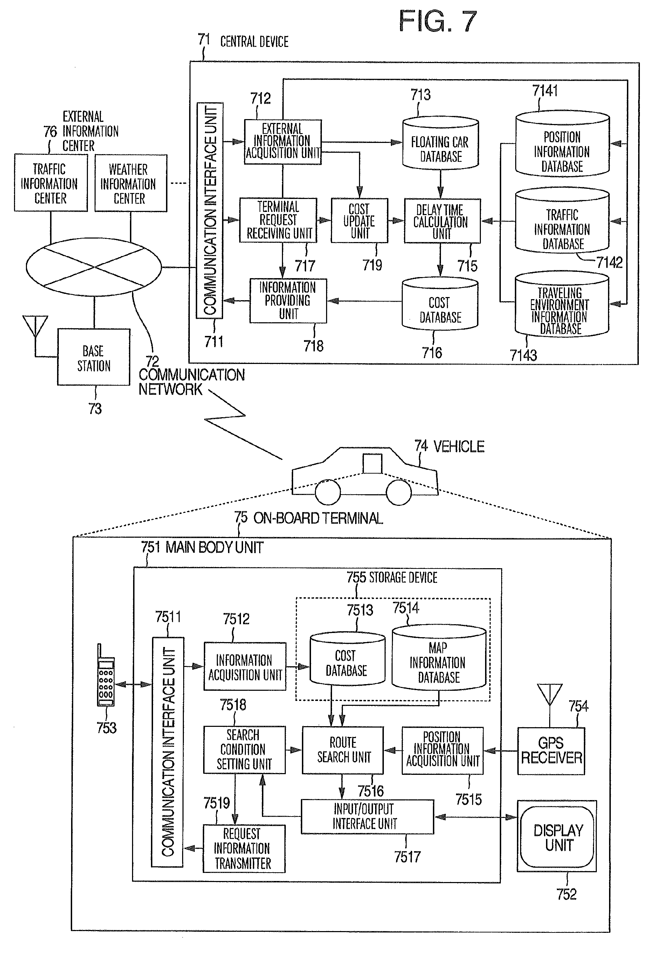

FIG 7 illustrates a configuration diagram of a route search system including an on-board terminal and a central device according to an embodiment of the present invention. As illustrated in FIG 7, the route search system according to the present embodiment includes a central device 71, a communication network 72 including an Internet and a public line network, a base station 73 including a cellular phone and a wireless LAN, an on-board terminal 75 mounted on a vehicle 74, and an external information center 76. A configuration of the on-board terminal 75 may be included into a normal navigation apparatus having a guide function up to a destination.

Configurations and functions of the central device 71 and the on-board terminal 75 will be described below. The central device 71 is configured by a computer including a communication device (not illustrated) connected to the communication network 72. Further, the computer includes a communication interface unit 711, an external information acquisition unit 712, a floating car database 713, a map information database 7141, a traffic information database 7142, a traveling environment information database 7143, a delay time calculation unit 715, a cost database 716, a terminal request receiving unit 717, an information providing unit 718, and a cost update unit 719.

In addition, the computer constituting the central device 71 includes at least an operational equipment and a storage device including a semiconductor memory and a hard disk device. Functions of each functional block constituting the central device 71 are realized by executing a predetermined program stored in the storage device through the arithmetic processing unit.

The communication interface unit 711 performs communication control to the communication network 72 as well as transmits and receives data via the communication network 72 between the communication interface unit 711 and the on-board terminal 75.

The external information acquisition unit 712 acquires floating car data transmitted from the on-board terminal 75 via the communication interface unit 711. Here, the floating car data is travel trajectory data of vehicles, and dot row data including vehicle information such as a travel speed, a moving direction, and brake information in addition to positional information (coordinates such as latitude and longitude) and time information. The external information acquisition unit 712 converts the acquired dot row floating car data into a necessary time, speed, and degree of traffic congestion for each link sequence or link, and stores them in the floating car database 713.

Via the communication interface unit 711, the external information acquisition unit 712 acquires the floating car data previously converted into a necessary time, speed, and degree of traffic congestion in units of road link. In this case, information in units of the road link is generated by the traffic information center connected via the on-board terminal 75 or communication network 72, and transmitted to the central device 71.

Further, via the communication interface unit 711, the external information acquisition unit 712 receives traffic information such as a link travel time from the traffic information center and stores the received traffic information in the traffic information database 7142, and further receives information such as weather and air temperature in an area of the link from the external information center 76 such as the weather information center and stores the received information in the traveling environment information database 7143. As a method for acquiring floating car data, map information, traffic information, and traveling environment information, the external information acquisition unit 712 may acquire the above information via recording media except the communication network 72.

Information stored in the map information database 7141, traffic information database 7142, and traveling environment information database 7143 has the same configuration as that of the information stored in the map information database 111, traffic information database 112, traveling environment information database 113 illustrated in FIG 2, and therefore a description will not be repeated.

The delay time calculation unit 715 has the same function as that of the delay time calculation unit 16 according to the first embodiment. Further, the delay time calculation unit 715 calculates the cost by using the map information, traffic information, and traveling environment information, respectively, included in the map information database 7141, traffic information database 7142, and traveling environment information database 7143. The cost calculation is executed in the case of receiving a cost update request from the cost update unit 719. Alternatively, the cost may be calculated by using the floating car data included in the floating car database 713. The cost calculation using the floating car data will be described in detail later.

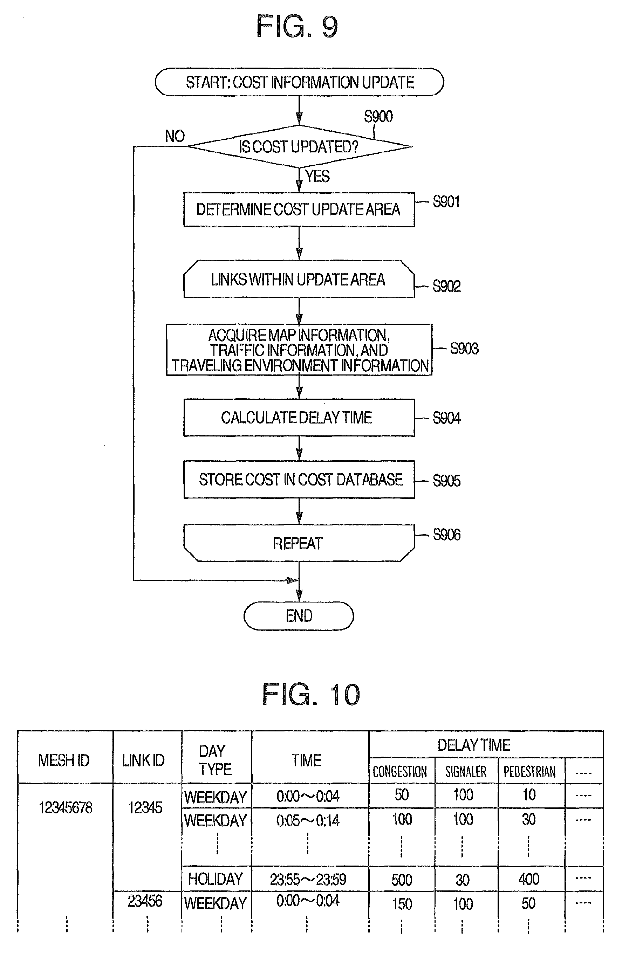

The cost calculated by the delay time calculation unit 715 is stored in the cost database 716. FIG 10 illustrates a configuration example of the cost information stored in the cost database 716. As illustrated in FIG 10, the delay time with respect to each avoidance item is recorded for each day type and time zone with respect to the link ID indicating each link. At this time, the cost information obtained by adding the multiple delay time may be recorded for each link.

The terminal request receiving unit 717 receives request information transmitted from the on-board terminal 75 via the communication interface unit 711. The above request information is information in which the on-board terminal 75 requests the central device 71 to provide the cost. In the route search system according to the present embodiment, the request information is used at the time of updating the cost information in the on-board terminal 75. Further, the terminal request receiving unit 717 transmits this request information to the cost update unit 719.

The information providing unit 718 functions to provide information according to the request information received from the terminal request receiving unit 717. When the update request of the cost information is included in the request information, the information providing unit 718 reads a latest cost at the time of matching the cost database 716 with the request information and provides the latest cost to the on-board terminal 75 via the communication interface unit 711.

The cost update unit 719 acquires acquisition conditions of external information from the external information acquisition unit 712 and request information from the terminal request receiving unit 717, respectively, and determines whether the cost update ought to be performed. If determining that the cost update is performed, the cost update unit 719 transmits a cost update request to the delay time calculation unit 715. The cost update processing is performed at timing such as (1) for each a fixed period of time, (2) a case where changes of a specified number or more are performed in information stored in the floating car database 713, the map information database 7141, the traffic information database 7142, the traveling environment information database 7143, and (3) a case where a request is received from the on-board terminal 75. Through the above processing, the route search is performed by using the cost on which later information is reflected, and smoother travel can be performed.

On the other hand, the on-board terminal 75 mounted on the vehicle 74 includes a main body unit 751, a display unit 752, a cellular phone 753, and a global positioning system (GPS) receiver 754.

The main body unit 751 is a computer including an arithmetic processing unit (not illustrated) and a storage device 755. Here, the storage device 755 is configured by a semiconductor memory and a hard disk device. In addition to the above, the main body unit 751 may include various switches, buttons, a touch panel, a remote controller, and a mike as an input device, and a speaker as an output device. Since the display unit 752 has the same function as that of the display unit 17 according to the first embodiment, a description will not be repeated.

The cellular phone 753 performs wireless communication with the base station 73, and the on-board terminal 75 is connected to the central device 71 via the base station 73 and the communication network 72 so as to perform data communication. Further, the GPS receiver 754 receives radio waves from the GPS satellite (not illustrated) and detects a present position of the vehicle 74.

Further, the main body unit 751 includes a communication interface unit 7511, an information acquisition unit 7512, a cost database 7513, a map information database 7514, a position information acquisition unit 7515, a route search unit 7516, an input/output interface unit 7517, a search condition setting unit 7518, and a request information transmitter 7519. A functional block of the above main body unit 751 is realized when the arithmetic processing unit (not illustrated) executes a predetermined program stored in the storage device 755. Here, in the previous embodiment, the delay time calculation unit 16 performs a cost calculation for searching the comfortable route. In the present embodiment, the central device previously calculates the delay time for each link and stores the calculated delay time in the cost database 716. The main body unit 751 then uses the delay time stored in the cost database 7513 of the on-board terminal 75, updated based on the above calculated delay time.

The communication interface unit 7511 performs communication control to the cellular phone 753 as well as transmits and receives data to and from the central device 71 via the base station 73 and the communication network 72.

The information acquisition unit 7512 acquires cost information transmitted from the central device 71 via the communication interface unit 7511, and stores the cost information in the cost database 7513. The information acquisition unit 7512 may supply cost update to the display unit 752 and notify the user of the updated cost information.

The position information acquisition unit 7515 acquires GPS information such as latitude, longitude, altitude, and time information detected by the GPS receiver 754, and transmits the GPS information to the route search unit 7516.

The route search unit 7516, input/output interface unit 7517, and search condition setting unit 7518 each have the same function as that of the route search unit 15, input/output interface unit 13, and search condition setting unit 14 according to the first embodiment, and therefore a description will not be repeated.

To the central device 71 via the communication interface unit 7511, the request information transmitter 7519 transmits request information in which update of cost data is confirmed and if update of the cost data is performed, the central device 71 is requested to transmit the cost data. The user may request cost via the input/output interface unit 7517, and the route search unit 7516 may request cost through the request at the time of searching routes. The request information includes an area and a date and time specified through the input/output interface unit 7517.

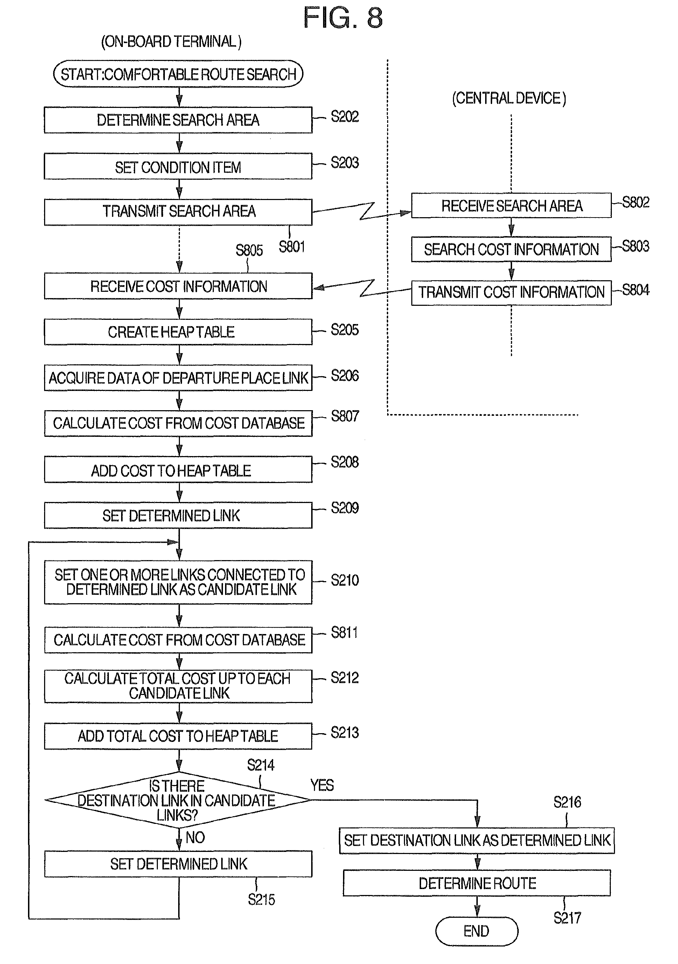

The comfortable route search processing of the route search system according to the present embodiment will be described below with reference to a flowchart illustrated in FIG 8. The same steps as those of the processing illustrated in FIG 2 are indicated by the same reference numerals as in FIG 2. Here, at each of steps S202, S203, S208 to S210, and S212 to S217, the same processing as that of the same step as in FIG 2 is performed, and therefore a description will not be repeated here. Steps S801 to S805, S807, and S811 will be described below.

The second embodiment greatly differs from the first embodiment in the following point. In the first embodiment, the delay time is calculated by using the delay time calculation unit 16 included in the navigation apparatus. On the other hand, in the second embodiment, the delay time is calculated by the delay time calculation unit 715 included in the central device 71, and the on-board terminal 75 receives the cost database on which the above calculation result is reflected. During the route search, the delay time calculation unit 715 calculates cost of the link with reference to the delay time from the cost database. Therefore, the on-board terminal 75 transmits a search area for performing the route search to the central device 71, and receives cost data relating to the search area from the central device 71 to thereby use the received cost data as the cost database 7513.

When the user selects the comfortable route as search conditions, processing of FIG 8 is started. The on-board terminal 75 transmits the search area determined at step S202 to the central device 71 via the communication network 72 (step S801).

The central device 71 receives the search area transmitted by the on-board terminal 75 (step S802), and searches the cost database 716 with respect to all the links included in the search area (step S803). At this time, the information providing unit 718 first extracts all the mesh IDs included in the search area, and reads cost information of all the links matched with the mesh ID with respect to the cost information in the cost database illustrated in FIG 10.

The central device 71 transmits to the on-board terminal 75 the entire cost information read from the cost database 716 (step S804), and the on-board terminal 75 receives the above cost information via the communication network 72 (step S805). The received cost information is stored in the cost database 7513 by the information acquisition unit 7512.

At step S807, the on-board terminal 75 searches the cost database 7513 to acquire the delay time by using the link ID of a departure place link acquired at step S206, and calculates the cost of the departure place link. In the same manner, the on-board terminal 75 acquires the delay time of each candidate link selected at step S210 from the cost database 7513 at step S811, and calculates cost of the link in the same manner as in the processing of step S510 according to the first embodiment.

Next, the cost information update processing of the cost database 716 of the central device 71 will be described with reference to a flowchart of FIG 9. The cost information update processing is performed at a constant frequency (e.g., for each five minutes).

A cost update unit 719 first acquires acquisition conditions of the external information from the external information acquisition unit 712, or acquires request information from the terminal request receiving unit 717 to thereby determine whether to perform the cost update (step S900). At this time, examples of the determination conditions include the prescribed time or more from the previous cost update elapses, changes of a specified number or more are performed in information stored in the floating car database 713, map information database 7141, traffic information database 7142, traveling environment information database 7143 due to acquisition of the external information, and the cost update is requested from the terminal. If any one of the determination conditions is satisfied, or some of the determination conditions are simultaneously satisfied, the cost update unit 719 determines that the cost update is performed. If not, the cost update unit 719 determines that the cost update is not performed. In the processing of step S900, the cost update unit 719 determines that the cost update is not performed (No at step S900), the processing of FIG. 9 is ended.

On the other hand, when the cost update unit 719 determines that the cost update is performed (Yes at step S900), the central device 71 first determines an area in which the cost update is performed (step S901). When the changes of a specified number or more are performed with regard to various databases, the above update area is specified by the mesh ID of a mesh including a link for performing update corresponding to them. Further, when the prescribed time or more from the previous cost update elapses, the update area is specified by the mesh ID of a mesh including a link in which data is updated. Alternatively, when the cost update is requested from a terminal, a mesh specified in the terminal becomes an update area.

Next, the delay time calculation unit 715 acquires the floating car data, map information, traffic information, and traveling environment information (step S903) corresponding to all the links included in the update area (step S902). At this time, the delay time calculation unit 715 searches information stored in the floating car database 713, the map information database 7141, the traffic information database 7142, and the traveling environment information database 7143 by using a link ID of the update link to thereby acquire information corresponding to the update link.

The delay time calculation unit 715 calculates the delay time of each link by using information acquired at step S903 (step S904). At this step, the delay time calculation unit 715 performs calculation processing of the delay time for each link in the same manner as in the processing of step S510 illustrated in FIG 5. Here, at step S904, as previously described, the delay time calculation unit 715 may calculate the delay time by using the map information, traffic information, and traveling environment information acquired at step S903 in the same manner as in step S509. Or, alternatively, the delay time calculation unit 715 may calculate the delay time by using the floating car data acquired at step S903. A method for calculating the delay time due to congestion, signalers, and pedestrians using the floating car data will be described below.

In the case of calculating the delay time $T_{d1}$ due to congestion, it is calculated as a real travel time by the following formula 9 by using the travel time $T_{probe}$ required for passing through each link based on the floating car data.

$$T_{d1} = Max\left(0, \quad T_{probe} - \frac{L}{V_{reg}}\right) \qquad \ldots \text{(Formula 9)}$$

In the case of calculating the delay time $T_{d2}$ due to signalers, an average stop time in a cross-point is calculated from the floating car data at the time of passing through a road interval (e.g., cross direction of 100 [m] of the cross-point) including a cross-point in which a signaler is present, and the average stop time is set as the delay time due to signalers.

In the case of calculating the delay time $T_{d3}$ due to pedestrians, n of the number of pedestrians, $l_{slow}$ of a distance for reducing speed per pedestrian, and $V_{slow}$ of slow speed of formula 7 are estimated from the floating car data obtained by traveling through a link near facilities in which a number of pedestrians are considered to move in and out around. When an estimate value is substituted into formula 7, the delay time $T_{d3}$ due to pedestrians is calculated.

As can be seen from the above sequence, when using the floating car data obtained by really traveling through a link, the exact delay time can be calculated and the comfortable route on which an actual situation is more reflected can be realized.

Returning to a description of FIG. 9, the delay time calculation unit 715 stores the cost calculated at step S904 in the cost database 716 (step S905). At this time, in extraction processing of the avoidance spot, the delay time calculation unit 715 extracts a link in which a sum of the calculated delay time is equal to or more than the threshold, and the avoidance spot list (not illustrated) is updated. This avoidance spot list may be stored in the cost database 716. When an un-updated link in which the processing is not performed is present within the update area, the above processing is repeated in each link (step S906).

In the above embodiment, the delay time information is calculated by the central device 71, and transmitted to the on-board terminal 75. When performing a route search, the on-board terminal 75 calculates the comfortable route. Here, the central device 71 includes the same function as that of the route search unit 7516 included in the on-board terminal 75, and a route searched by the central device may be transmitted to the on-board terminal 75 and displayed thereon. At this time, the searched route is transmitted as a set of the link IDs of links constituting the route.

It should be further understood by those skilled in the art that although the foregoing description has been made on embodiments of the invention, the invention is not limited thereto and various changes and modifications may be made without departing from the spirit of the invention and the scope of the appended claims.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. A route searching method for receiving position information of a departure place and a destination and searching a route from the departure place to the destination, comprising:

    receiving an input of a spot desired to be avoided in a route to be searched;
    calculating a delay time of each link based on an avoidance condition item of this spot; and
    calculating a cost minimum route based on a cost on which the delay time of each calculated link is reflected at the time of calculating a route from the departure place to the destination.

2. The route searching method according to claim 1,
   wherein the avoidance condition item is an item of a traffic condition including at least any of congestion, signalers, and pedestrians.

3. The route searching method according to claim 1 or 2,
   wherein:

   at the time of calculating the delay time of each link based on the avoidance condition item corresponding to the input spot, an item of the traffic condition corresponding to the spot is found with respect to each spot; and a sum of the delay time found for each item of the traffic condition is calculated with respect to each link corresponding to the spot.

4. The route searching method according to claims 1 to 3,
   wherein the calculated route is displayed by using a mark or color indicating a size of the delay time calculated in each link included in the route.

5. A navigation apparatus for searching a route from a departure place to a destination, comprising:

   a user input receiving unit (13, 7517) to receive an input of a spot desired to be avoided in a route to be searched;
   a delay time calculation unit (16, 715) to calculate a delay time of each link based on an avoidance condition item of an input spot; and
   a route search unit (15, 7516) to calculate a cost minimum route from the departure place to the destination by using a cost on which the delay time of each calculated link is reflected.

6. The navigation apparatus according to claim 5,
   wherein the user input receiving unit (13, 7517) receives an item of a traffic condition including at least any of congestion, signalers, and pedestrians as the avoidance condition item.

7. The navigation apparatus according to claim 5 or 6,
   wherein the delay time calculation unit (16, 715) finds an item of the traffic condition corresponding to a spot with respect to each input spot, and calculates a sum of the delay time found for each item of the traffic condition relating to a link corresponding to a spot.

8. The navigation apparatus according to claims 5 to 7, further comprising a display unit (17, 752),
   wherein in each link included in a route calculated in the route search unit (15, 7516), the route is displayed on the display unit (17, 752) by using a mark or color indicating a size of the calculated delay time.

# FIG. 1

11 STORAGE DEVICE

| 111 | 112 | 113 | 114 |
|---|---|---|---|
| MAP INFORMATION DATABASE | TRAFFIC INFORMATION DATABASE | TRAVELING ENVIRONMENT INFORMATION DATABASE | AVOIDANCE SPOT LIST |

| DELAY TIME CALCULATION UNIT | ROUTE SEARCH UNIT | SEARCH CONDITION SETTING UNIT | POSITION INFORMATION ACQUISITION UNIT |
|---|---|---|---|
| 16 | 15 | 14 | 12 |

INPUT/OUTPUT INTERFACE UNIT

DISPLAY UNIT

13

17

# FIG. 2

```
( START:COMFORTABLE ROUTE SEARCH )
                  ↓
      DETERMINE SEARCH AREA              — S202
                  ↓
        SET CONDITION ITEM               — S203
                  ↓
        CREATE HEAP TABLE                — S205
                  ↓
  ACQUIRE DATA OF DEPARTURE PLACE LINK   — S206
                  ↓
    CALCULATE COST OF DEPARTURE          — S207
           PLACE LINK
                  ↓
      ADD COST TO HEAP TABLE             — S208
                  ↓
        SET DETERMINED LINK              — S209
                  ↓
  SET ONE OR MORE LINKS CONNECTED TO     — S210
  DETERMINED LINK AS CANDIDATE LINK
                  ↓
  CALCULATE COST OF EACH CANDIDATE LINK  — S211
                  ↓
    CALCULATE TOTAL COST UP TO           — S212
      EACH CANDIDATE LINK
                  ↓
     ADD TOTAL COST TO HEAP TABLE        — S213
                  ↓
                            S214
          IS THERE                    YES
  DESTINATION LINK IN CANDIDATE  ───────────→   SET DESTINATION LINK AS DETERMINED LINK   — S216
         LINKS?                                            ↓
           ↓ NO                                    DETERMINE ROUTE
    SET DETERMINED LINK                                    ↓
                                                      ( END )        — S217
           S215
```

# FIG. 3A

LINK INFORMATION

| MESH ID | LINK ID | ROAD TYPE | REGU-LATORY SPEED | ROAD WIDTH | LATITUDE | LONGITUDE | THE NUMBER OF ACCIDENTS | SIGNALER | CROSSING | SPOT NAME |
|---|---|---|---|---|---|---|---|---|---|---|
| 12345678 | 12345 | NATIONAL ROAD | 60 | 6 | 36.5 | 140.5 | 9 | PRESENT | ABSENT | ○×ICHI-CHOME |
| | 23456 | PREFEC-TURAL ROAD | 50 | 4 | 35.7 | 139.8 | 0 | ABSENT | PRESENT | IN FRONT OF △□ SCHOOL |

# FIG. 3B

FACILITY INFORMATION

| MESH ID | FACILITY NAME | FACILITY TYPE | LATITUDE | LONGITUDE |
|---|---|---|---|---|
| 12345678 | ○○ DEPARTMENT STORE | DEPARTMENT STORE | 36.4 | 140.6 |
| | ×× MIDDLE SCHOOL | SCHOOL | 35.6 | 139.9 |

# FIG. 3C

TRAFFIC INFORMATION

| MESH ID | LINK ID | DAY TYPE | TIME | STATISTICAL TRAVEL TIME | STATISTICAL TRAVEL SPEED |
|---|---|---|---|---|---|
| 12345678 | 12345 | WEEKDAY | 0:00~0:04 | 4 | 50 |
| | | WEEKDAY | 0:05~0:14 | 5 | 40 |
| | | HOLIDAY | 23:55~23:59 | 3 | 60 |
| | 23456 | WEEKDAY | 0:00~0:04 | 7 | 30 |

# FIG. 3D

TRAVELING ENVIRONMENT INFORMATION

| MESH ID | LINK ID | SIGNAL STOP TIME | WEATHER | AIR TEMPERATURE | ROAD SURFACE TEMPERATURE | WIND SPEED | THE NUMBER OF PEDESTRIANS |
|---|---|---|---|---|---|---|---|
| 12345678 | 12345 | 40 | FINE | 30 | 40 | 5 | 100 |
| | 23456 | 0 | RAINY | 15 | 10 | 15 | 10 |

# FIG. 4

HEAP TABLE

| CANDIDATE MESH ID | CANDIDATE LINK ID | COST | CONNECTION SOURCE LINK ID | TOTAL COST | DETERMINED FLAG | DELAY TIME | | | |
|---|---|---|---|---|---|---|---|---|---|
| | | | | | | CONGESTION | SIGNALER | PEDESTRIAN | ----- |
| 12345678 | 23456 | 100 | 12345 | 3000 | DETERMINED | 300 | 100 | 50 | ----- |
| | | | | | UNDETERMINED | | | | ----- |

# FIG. 5

START: COST CALCULATION

ACQUIRE MESH ID, LINK ID, AND AVOIDANCE CONDITION — S501

S502
IS AVOIDANCE CONDITION φ ?

NO

YES

SET SELECTED AVOIDANCE ITEM AS EVALUATION AVOIDANCE ITEM — S504

SET ALL AVOIDANCE ITEMS AS EVALUATION AVOIDANCE ITEM — S503

S505
IS AVOIDANCE SPOT SELECTED?

YES

NO

ACQUIRE POSITION INFORMATION OF AVOIDANCE SPOT — S506

IS LINK ID MATCHED WITH AVOIDANCE SPOT? — S507

NO

YES

ACQUIRE AVOIDANCE ITEM PREVIOUSLY SET TO AVOIDANCE SPOT AND SET IT AS EVALUATION AVOIDANCE ITEM — S508

ACQUIRE MAP INFORMATION, TRAFFIC INFORMATION, AND TRAVELING ENVIRONMENT INFORMATION — S509

CALCULATE DELAY TIME — S510

ADD DELAY TIME TO HEAP TABLE — S511

CALCULATE COST — S512

END

# FIG. 6

| | | ROAD TYPE OF CROSSING POINT LINK | | | | |
|---|---|---|---|---|---|---|
| | | EXPRESS WAY | NATIONAL ROAD | PREFECTURAL ROAD | LOCAL ROAD | |
| ROAD TYPE OF ADVANCING LINK | EXPRESS WAY | 0% | 0% | 0% | 0% | ------- |
| | NATIONAL ROAD | 0% | 50% | 40% | 35% | ------- |
| | PREFECTURAL ROAD | 0% | 60% | 50% | 40% | ------- |
| | LOCAL ROAD | 0% | 65% | 60% | 50% | ------- |

# FIG. 7

71 CENTRAL DEVICE

EXTERNAL
76 INFORMATION
CENTER

TRAFFIC
INFORMATION
CENTER

WEATHER
INFORMATION
CENTER

COMMUNICATION INTERFACE UNIT

712
EXTERNAL
INFORMATION
ACQUISITION UNIT

713
FLOATING CAR
DATABASE

7141
POSITION
INFORMATION
DATABASE

TERMINAL
REQUEST
RECEIVING UNIT

COST
UPDATE
UNIT

DELAY TIME
CALCULATION
UNIT

TRAFFIC
INFORMATION
DATABASE

717     719     715

7142

INFORMATION
PROVIDING
UNIT

COST
DATABASE

TRAVELING
ENVIRONMENT
INFORMATION
DATABASE

711     718     716     7143

BASE
STATION

72
COMMUNICATION
NETWORK

73

74 VEHICLE

75 ON-BOARD TERMINAL

751 MAIN BODY UNIT

755 STORAGE DEVICE

7511     7512     7513     7514

INFORMATION
ACQUISITION UNIT

COST
DATABASE

MAP
INFORMATION
DATABASE

COMMUNICATION INTERFACE UNIT

753

7518
SEARCH
CONDITION
SETTING UNIT

ROUTE
SEARCH UNIT

POSITION
INFORMATION
ACQUISITION UNIT

754
GPS
RECEIVER

7516     7515

7519
REQUEST
INFORMATION
TRANSMITTER

INPUT/OUTPUT
INTERFACE UNIT

DISPLAY
UNIT

7517     752

22

# FIG. 8

(ON-BOARD TERMINAL)

```
┌───────────────────────────────────────────┐
(  START:COMFORTABLE ROUTE SEARCH  )
└───────────────────────────────────────────┘
                    │
┌───────────────────────────────────┐
│        DETERMINE SEARCH AREA       │── S202
└───────────────────────────────────┘
                    │
┌───────────────────────────────────┐
│          SET CONDITION ITEM        │── S203
└───────────────────────────────────┘
                    │
┌───────────────────────────────────┐
│        TRANSMIT SEARCH AREA        │
└───────────────────────────────────┘
```

(CENTRAL DEVICE)

| | |
|---|---|
| RECEIVE SEARCH AREA | S802 |
| SEARCH COST INFORMATION | S803 |
| TRANSMIT COST INFORMATION | S804 |

S805    S801

| | |
|---|---|
| RECEIVE COST INFORMATION | |
| CREATE HEAP TABLE | S205 |
| ACQUIRE DATA OF DEPARTURE PLACE LINK | S206 |
| CALCULATE COST FROM COST DATABASE | S807 |
| ADD COST TO HEAP TABLE | S208 |
| SET DETERMINED LINK | S209 |
| SET ONE OR MORE LINKS CONNECTED TO DETERMINED LINK AS CANDIDATE LINK | S210 |
| CALCULATE COST FROM COST DATABASE | S811 |
| CALCULATE TOTAL COST UP TO EACH CANDIDATE LINK | S212 |
| ADD TOTAL COST TO HEAP TABLE | S213 |

S214

IS THERE DESTINATION LINK IN CANDIDATE LINKS?

YES →

| | |
|---|---|
| SET DESTINATION LINK AS DETERMINED LINK | S216 |
| DETERMINE ROUTE | |

END — S217

NO ↓

| | |
|---|---|
| SET DETERMINED LINK | |

S215

23

# FIG. 9

START: COST INFORMATION UPDATE

IS COST UPDATED? — S900
NO

YES

DETERMINE COST UPDATE AREA — S901

LINKS WITHIN UPDATE AREA — S902

ACQUIRE MAP INFORMATION, TRAFFIC INFORMATION, AND TRAVELING ENVIRONMENT INFORMATION — S903

CALCULATE DELAY TIME — S904

STORE COST IN COST DATABASE — S905

REPEAT — S906

END

# FIG. 10

| MESH ID | LINK ID | DAY TYPE | TIME | DELAY TIME | | | |
|---|---|---|---|---|---|---|---|
| | | | | CONGESTION | SIGNALER | PEDESTRIAN | ---- |
| 12345678 | 12345 | WEEKDAY | 0:00~0:04 | 50 | 100 | 10 | ---- |
| | | WEEKDAY | 0:05~0:14 | 100 | 100 | 30 | ---- |
| | | HOLIDAY | 23:55~23:59 | 500 | 30 | 400 | ---- |
| | 23456 | WEEKDAY | 0:00~0:04 | 150 | 100 | 50 | ---- |

FIG. 11A

SEARCH CONDITION SETTING

| TIME PREFERENTIAL ROUTE | ~1101 |

| DISTANCE PREFERENTIAL ROUTE | ~1102 |

| FUEL CONSUMPTION PREFERENTIAL ROUTE | ~1103 |

| COMFORTABLE ROUTE | ~1104 |

FIG. 11B

SELECTION OF ITEM DESIRED TO BE AVOIDED

1111

1112 ☑ CONGESTION

1113 ◯ SIGNALER

☑ PEDESTRIAN

SELECTION OF SPOT DESIRED TO BE AVOIDED

1121

1122 ◯ ◯◯ CROSSING

1123 ☑ △△-CHOME SIGNALER

◯ ✕✕ ELEMENTARY SCHOOL

FIG. 12A

1215

1211

1213   1214   CONGESTION OCCURS!

LONG SIGNAL WAITING!   1216

FIG. 12B

ROUTE SELECTION

1222

1223

1224

1225

1221

| ROUTE A | |
|---|---|
| DELAY TIME | 5 : 00 |
| NECESSARY TIME | 30 : 00 |
| TRAVEL DISTANCE | 20km |
| TOLL | 0 YEN |
| ROUTE B | |
| DELAY TIME | 6 : 00 |
| NECESSARY TIME | 25 : 00 |
| TRAVEL DISTANCE | 18km |
| TOLL | 500 YEN |
| ROUTE C | |
| DELAY TIME | 8 : 00 |
| NECESSARY TIME | 28 : 00 |
| TRAVEL DISTANCE | 25km |
| TOLL | 0 YEN |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005077299 A

**Non-patent literature cited in the description**

- **YASUNORI IIDA et al.** Traffic Engineering. Koku-min-Kagakusha, 1992, 248-249